# EUROPEAN PATENT APPLICATION

(11) **EP 4 144 227 A1**
(43) Date of publication of application: **08.03.2023**
(21) Application number: 21796824.7
(22) Date of filing: 27.04.2021
(51) Int. Cl.: A23L 27/00, A23L 2/00, A23L 2/60

(54) **BEVERAGE CONTAINING REBAUDIOSIDE A, METHOD FOR PRODUCING SAME, AND METHOD FOR REDUCING BITTERNESS OF REBAUDIOSIDE A**

(30) Priority: 28.04.2020 JP 2020079217
(71) Applicant: Suntory Holdings Limited, Osaka 530-8203 (JP)
(72) Inventor: YOSHII, Takaaki, Soraku-gun, Kyoto 619-0284 (JP); HATA, Yuto, Soraku-gun, Kyoto 619-0284 (JP); NAKAHARA, Koichi, Soraku-gun, Kyoto 619-0284 (JP); UEMURA, Masahide, Soraku-gun, Kyoto 619-0284 (JP)
(74) Representative: Vossius & Partner Patentanwälte Rechtsanwälte mbB
(86) International application number: PCT/JP2021/016705
(87) International publication number: WO 2021/221033

(57) **Abstract**

The present invention aims to provide a rebaudioside A-containing beverage, a production method thereof, and a method of reducing bitterness of rebaudioside A, wherein the bitterness of rebaudioside A, particularly the bitter aftertaste of rebaudioside A, is reduced. The present invention relates to a rebaudioside A-containing beverage containing rebaudioside A at a concentration of 30 to 2000 ppm and an ethyl glycoside at a concentration of 5 to 5000 ppm.

## Description

### TECHNICAL FIELD

The present invention relates to a rebaudioside A-containing beverage and a production method thereof. The present invention also relates to, for example, a method of reducing bitterness of rebaudioside A.

### BACKGROUND ART

Stevia extracts are widely used as sweeteners. Terpenoid glycosides such as rebaudioside A are known to function as sweet components. However, unlike the sweetness of sugar, the sweetness of rebaudioside A cannot be tasted immediately, and rebaudioside A tastes bitter, has a bitter aftertaste, and has other disadvantages. Techniques to improve the sweetness of rebaudioside A have been studied. Patent Literature 1 discloses a functional sweetener composition containing at least one antioxidant, at least one high sweetness sweetener, and at least one sweetness improving composition.

### CITATION LIST

### - Patent Literature

Patent Literature 1: JP 2009-523407 T

### SUMMARY OF INVENTION

### - Technical Problem

However, Patent Literature 1 is silent about studies on reducing the bitterness of rebaudioside A.

The present invention aims to provide a rebaudioside A-containing beverage and a production method thereof, wherein the bitterness of rebaudioside A, particularly the bitter aftertaste of rebaudioside A, is reduced. The present invention also aims to provide a method of reducing bitterness of rebaudioside A.

### - Solution to Problem

As a result of extensive studies to solve the above problems, the present inventors found that adding an ethyl glycoside to a rebaudioside A-containing beverage can reduce the bitter aftertaste (lingering bitterness) derived from rebaudioside A.

Specifically, the present invention relates to, but is not limited to, the following beverage and the like.
(1) A rebaudioside A-containing beverage containing rebaudioside A at a concentration of 30 to 2000 ppm and an ethyl glycoside at a concentration of 5 to 5000 ppm.
(2) The beverage according to (1) above, wherein the ethyl glycoside concentration is 100 to 5000 ppm.
(3) The beverage according to (1) or (2) above, wherein the ethyl glycoside is an ethyl glucoside.
(4) A method of producing a rebaudioside A-containing beverage containing rebaudioside A and an ethyl glycoside, the method including adjusting a rebaudioside A concentration to 30 to 2000 ppm and an ethyl glycoside concentration to 5 to 5000 ppm in the beverage.
(5) A method of reducing bitterness of rebaudioside A, the method including adding an ethyl glycoside to rebaudioside A.
(6) The method of reducing bitterness of rebaudioside A according to (5) above for a rebaudioside A-containing beverage, the method including adjusting a rebaudioside A concentration to 30 to 2000 ppm and an ethyl glycoside concentration to 5 to 5000 ppm in the beverage.
(7) A rebaudioside A bitterness reducer containing an ethyl glycoside as an active ingredient.

### - Advantageous Effects of Invention

The present invention can provide a rebaudioside A-containing beverage and a production method thereof, wherein the bitterness of rebaudioside A, particularly the bitter aftertaste of rebaudioside A, is reduced. The present invention can also provide a method of reducing bitterness of rebaudioside A, particularly the bitter aftertaste of rebaudioside A.

### DESCRIPTION OF EMBODIMENTS

A rebaudioside A-containing beverage of the present invention contains rebaudioside A at a concentration of 30 to 2000 ppm and an ethyl glycoside at a concentration of 5 to 5000 ppm.

Rebaudioside A (RebA) is a known sweet component found in stevia extracts. In the rebaudioside A-containing beverage of the present invention, the bitterness derived from rebaudioside A, particularly the bitter aftertaste of rebaudioside A, is reduced by the ethyl glycoside.

The source and production method of rebaudioside A are not limited. Rebaudioside A may be a synthetic product obtained by an organic chemical method or a product isolated or purified from natural products.

A stevia extract can be used as a starting material for isolation or purification of rebaudioside A. The stevia extract can be obtained by extraction and purification from dry leaves of *Stevia rebaudiana* of the Asteraceae family. Rebaudioside A can be purified according to the method disclosed in JP 2009-517043 T, for example. Rebaudioside A may be added in the form of a stevia extract to a beverage.

The rebaudioside A-containing beverage of the present invention has a rebaudioside A concentration of 30 to 2000 ppm. Ethyl glycoside can reduce the bitterness (particularly bitter aftertaste) derived from rebaudioside A in the beverage containing rebaudioside A at a concentration in the above range. In the rebaudioside A-containing beverage, the rebaudioside A concentration is preferably 50 ppm or more, more preferably 100 ppm or more, and is preferably 1500 ppm or less, more preferably 1000 ppm or less. In one embodiment, the rebaudioside A concentration in the beverage is preferably 50 to 1500 ppm, more preferably 100 to 1000 ppm. When the rebaudioside A concentration is in the above range, the ethyl glycoside can particularly effectively reduce the bitterness of rebaudioside A.

Herein, the unit "ppm" means weight/volume (w/v) ppm.

The rebaudioside A concentration can be analyzed, for example, by high performance liquid chromatography (HPLC).

Ethyl glycoside is a compound having a structure in which a hydroxy group attached to the carbon atom at position 1 of a reducing sugar is replaced by an ethoxy group. A preferred reducing sugar to form ethyl glycoside is a monosaccharide, such as glucose, fructose, galactose, mannose, or xylose. The reducing sugar may be in the D form, L form, or DL form. The D form is preferred.

Examples of the ethyl glycoside include ethyl glucoside, ethyl fructoside, ethyl galactoside, ethyl mannoside, and ethyl xyloside. The ethyl glycoside may be one or combination of these. Of these, the ethyl glycoside is preferably ethyl glucoside. The ethyl glucoside may be either ethyl-α-glucoside or ethyl-β-glucoside or may be a mixture of ethyl-α-glucoside and ethyl-β-glucoside. The ethyl glycoside is preferably ethyl-α-glucoside, more preferably ethyl-α-D-glucoside.

The ethyl glycoside may be produced by any method. For example, the ethyl glycoside can be obtained by reacting a reducing sugar with ethanol. For example, the ethyl glucoside can be obtained by reacting glucose with ethanol.

The ethyl glycoside concentration in the rebaudioside A-containing beverage is 5 to 5000 ppm. When the ethyl glycoside concentration in the rebaudioside A-containing beverage is 5 ppm or more, the bitterness of rebaudioside A, particularly the bitter aftertaste of rebaudioside A, can be reduced. A rebaudioside A-containing beverage containing an ethyl glycoside at a concentration of 5000 ppm or less is less likely to produce bitterness or the like from the ethyl glycoside. The ethyl glycoside concentration in the beverage is preferably 10 ppm or more, more preferably 50 ppm or more, still more preferably 100 ppm or more, and is more preferably 1000 ppm or less. In one embodiment, the ethyl glycoside concentration in the beverage is preferably 10 to 5000 ppm, more preferably 50 to 5000 ppm, still more preferably 100 to 5000 ppm, particularly preferably 100 to 1000 ppm. The ethyl glycoside concentration refers to the total ethyl glycoside concentration.

The ethyl glycoside concentration in the rebaudioside A-containing beverage can be measured by high performance liquid chromatography (HPLC) using a known method.

In one embodiment, preferred ranges of the rebaudioside A concentration and the ethyl glycoside concentration in the rebaudioside A-containing beverage are as follows.

When the rebaudioside A concentration is 30 ppm or more and less than 50 ppm, the ethyl glycoside concentration is 10 to 5000 ppm, preferably 100 to 1000 ppm.

When the rebaudioside A concentration is 50 ppm or more and less than 100 ppm, the ethyl glycoside concentration is 10 to 5000 ppm, preferably 100 to 5000 ppm.

When the rebaudioside A concentration is 100 ppm or more and less than 250 ppm, the ethyl glycoside concentration is 10 to 5000 ppm, preferably 50 to 5000 ppm.

When the rebaudioside A concentration is 250 ppm or more and less than 500 ppm, the ethyl glycoside concentration is 10 to 5000 ppm, preferably 100 to 1000 ppm.

When the rebaudioside A concentration is 500 ppm or more and less than 1000 ppm, the ethyl glycoside concentration is 5 to 5000 ppm, preferably 100 to 5000 ppm.

When the rebaudioside A concentration is 1000 ppm or more and less than 1500 ppm, the ethyl glycoside concentration is 10 to 5000 ppm.

When the rebaudioside A concentration is 1500 to 2000 ppm, the ethyl glycoside concentration is 10 to 5000 ppm.

When the concentrations are in the above ranges, the bitterness of rebaudioside A, particularly the bitter aftertaste of rebaudioside A, can be further reduced.

The rebaudioside A-containing beverage of the present invention may contain one or more additives such as fragrances, vitamins, pigments, antioxidants, acidulants, sweeteners other than rebaudioside A, emulsifiers, preservatives, seasonings, extracts, pH regulators, and quality stabilizers, as long as the effect of the present invention is not impaired. The rebaudioside A-containing beverage of the present invention contains water. The rebaudioside A-containing beverage of the present invention may be a beverage containing carbon dioxide. Carbon dioxide may be pressed into the rebaudioside A-containing beverage.

Non-limiting examples of the rebaudioside A-containing beverage include cola beverages, carbonated beverages, tea beverages, coffee beverages, fruit beverages, and flavored water.

In the present invention, the beverage may be in any form and can be provided as a beverage sealed in a container. In one embodiment, the rebaudioside A-containing beverage is preferably a beverage sealed in a container. The form of the container is not limited. For example, a sealed container such as a bottle (e.g., a glass bottle), a can, a resin bottle (e.g., a plastic bottle), an aluminum pouch, or a plastic pouch can be used for filling to provide a beverage sealed in a container. In the present invention, the container is preferably a glass bottle or a plastic bottle to provide a beverage sealed in a glass bottle or a beverage sealed in a plastic bottle.

### <Method of producing rebaudioside A-containing beverage>

The present invention also encompasses a method of producing a rebaudioside A-containing beverage described below:
a method of producing a rebaudioside A-containing beverage containing rebaudioside A and an ethyl glycoside, the method including adjusting a rebaudioside A concentration to 30 to 2000 ppm and an ethyl glycoside concentration to 5 to 5000 ppm in the beverage.

The method and order of adjusting the rebaudioside A concentration and the ethyl glycoside concentration are not limited, as long as the resulting rebaudioside A-containing beverage contains rebaudioside A and an ethyl glycoside at the concentrations described above. The method may include a step different from the step described above, such as a step of filling a container with the beverage.

The rebaudioside A, ethyl glycoside, amounts (concentrations) thereof, preferred embodiments thereof, and the like are the same as those of the rebaudioside A-containing beverage described above.

### <Method of reducing bitterness of rebaudioside A>

The following method of reducing bitterness of rebaudioside A is also encompassed by the present invention:
a method of reducing bitterness of rebaudioside A, the method including adding an ethyl glycoside to rebaudioside A.

Adding an ethyl glycoside to rebaudioside A can reduce the bitterness of rebaudioside A, particularly the bitter aftertaste of rebaudioside A. Thus, the bitterness (particularly bitter aftertaste) of rebaudioside A can be reduced, for example, in a food or beverage such as a rebaudioside A-containing beverage. The method of adding an ethyl glycoside to rebaudioside A is not limited. For example, an ethyl glycoside may be added to rebaudioside A or a composition such as a rebaudioside A-containing beverage, or an ethyl glycoside or a composition containing an ethyl glycoside may be added to rebaudioside A.

The method of the present invention is preferably used, for example, for reducing the bitterness of rebaudioside A (bitterness derived from rebaudioside A) in the rebaudioside A-containing beverage.

When reducing the bitterness derived from rebaudioside A in the rebaudioside A-containing beverage, preferred embodiments of the rebaudioside A, ethyl glycoside, and concentrations thereof, and the like are the same as those of the rebaudioside A-containing beverage described above.

In one embodiment of the method of reducing bitterness of rebaudioside A in a rebaudioside A-containing beverage, preferably, the rebaudioside A concentration is adjusted to 30 to 2000 ppm and the ethyl glycoside concentration is adjusted to 5 to 5000 ppm in the beverage.

In another embodiment, preferably, the rebaudioside A concentration is adjusted to 10 ppm or more and less than 30 ppm and the ethyl glycoside concentration is adjusted to 50 to 5000 ppm (preferably 100 to 5000 ppm) in the beverage.

When the rebaudioside A concentration and the ethyl glycoside concentration in the rebaudioside A-containing beverage are in the above ranges, the bitterness derived from rebaudioside A, particularly the bitter aftertaste derived from rebaudioside A, can be reduced. Preferably, the rebaudioside A concentration and the ethyl glycoside concentration in the beverage are adjusted to the above ranges when adding an ethyl glycoside to rebaudioside A.

The method and order of adjusting rebaudioside A and ethyl glycoside concentration are not limited. The method may include a step such as filling a container with the beverage. The method may include a step of filling a container with the beverage.

The present invention also encompasses a rebaudioside A bitterness reducer containing an ethyl glycoside as an active ingredient.

The ethyl glycoside is effective in masking the bitterness of rebaudioside A, particularly the aftertaste of rebaudioside A, and can be used as an active ingredient for reducing the bitterness of rebaudioside A. The bitterness reducer of the present invention can be used for reducing the bitterness derived from rebaudioside A by being added to a beverage or the like, for example. In one embodiment, preferably, the bitterness reducer of the present invention is added to a rebaudioside A-containing beverage, for example.

In one embodiment, preferably, the bitterness reducer of the present invention is added to a beverage containing rebaudioside A at a concentration of 30 to 2000 ppm to adjust the ethyl glycoside concentration to 5 to 5000 ppm. In another embodiment, the bitterness reducer of the present invention is added to a beverage containing rebaudioside A at a concentration of 10 ppm or more to less than 30 ppm to adjust the ethyl glycoside concentration to 50 to 5000 ppm (preferably 100 to 5000 ppm).

Herein, the following rebaudioside A-containing beverage is also disclosed:
a rebaudioside A-containing beverage containing rebaudioside A and an ethyl glycoside, wherein the rebaudioside A concentration is 10 ppm or more and less than 30 ppm.

In the rebaudioside A-containing beverage, the ethyl glycoside concentration is preferably 50 ppm or more, more preferably 50 to 5000 ppm, still more preferably 100 to 5000 ppm. The bitterness derived from rebaudioside A can be reduced when the rebaudioside A concentration in the beverage is 10 ppm or more and less than 30 ppm, with the ethyl glycoside concentration in the above range.

### EXAMPLES

The following provides examples that more specifically describe the present invention. The present invention is not limited to these examples.

In Examples, ethyl glycoside was ethyl-α-D-glucoside (hereinafter described as "EG").

### (Example 1)

Rebaudioside A (hereinafter sometimes described as "RebA") and EG were dissolved in water (commercially available mineral water having a hardness of 0 to 100 mg/L) to prepare samples. Specifically, samples were prepared by varying the RebA concentration at the following 11 levels: 0 ppm, 0.5 ppm, 10 ppm, 25 ppm, 50 ppm, 100 ppm, 250 ppm, 500 ppm, 1000 ppm, 1500 ppm, and 2000 ppm; and varying the EG concentration at the following 9 levels: 0 ppm, 5 ppm, 10 ppm, 50 ppm, 100 ppm, 250 ppm, 500 ppm, 1000 ppm, and 5000 ppm.

Two panelists (panelists A and B) experienced in sensory evaluation performed sensory evaluation on the bitter aftertaste of each sample. In the sensory evaluation, each panelist tasted the sample (10 mL) in the mouth for five seconds, spit out the sample, and evaluated the bitter aftertaste intensity (bitterness lingering in the mouth after spitting). When evaluating a different sample, each panelist rinsed the mouth with water until the taste in the mouth disappeared. For the sensory evaluation, the panelists exchanged views in advance to achieve a mutual understanding on the bitterness intensity. The sensory evaluation was performed by the panelists having a common understanding that the samples were evaluated based on the following criteria.

The bitter aftertaste intensities of samples free of EG were set as reference points. The bitter aftertaste intensity of a sample free of RebA and EG (water) was scored as "1"; the bitter aftertaste intensity of a sample with 25 ppm RebA and 0 ppm EG (no addition of EG) was scored as "2"; the bitter aftertaste intensity of a sample with 100 ppm RebA and 0 ppm EG was scored as "3"; the bitter aftertaste intensity of a sample with 500 ppm RebA and 0 ppm EG was scored as "4"; the bitter aftertaste intensity of a sample with 1000 ppm RebA and 0 ppm EG was scored as "5"; and the bitter aftertaste intensity of a sample with 1500 ppm RebA and 0 ppm EG was scored as "6". Specifically, the bitter aftertaste intensity was evaluated at 11 levels with 0.5 increments based on the following criteria (1 to 6 points). Subsequently, the scores given by the panelists were averaged.

### Criteria for bitter aftertaste

1: No bitter aftertaste is felt (comparable to the bitter aftertaste of water free of RebA and EG or even less bitter aftertaste).
2: The bitter aftertaste is slightly felt (comparable to the bitter aftertaste of a sample with 25 ppm RebA and 0 ppm EG).
3: The bitter aftertaste is moderately felt (comparable to the bitter aftertaste of a sample with 100 ppm RebA and 0 ppm EG).
4: The bitter aftertaste is felt (comparable to the bitter aftertaste of a sample with 500 ppm RebA and 0 ppm EG)
5: The bitter aftertaste is strongly felt (comparable to the bitter aftertaste of a sample with 1000 ppm RebA and 0 ppm EG).
6: The bitter aftertaste is very strongly felt (comparable to the bitter aftertaste of a sample with 1500 ppm RebA and 0 ppm EG).

Table 1 shows weight ratios of ethyl glycoside (EG) to rebaudioside A (RebA) (EG/RebA) in the samples.

Table 2 shows the results of the sensory evaluation on the samples by the panelists (scores of the bitter aftertaste). Table 3 shows average bitter aftertaste scores.

Table 4 shows the degree of reduction in bitter aftertaste of Reb A by addition of EG, as calculated from the results shown in Table 3. The degree of reduction in bitterness is indicated by a value of X minus Y (X-Y), where X is the score of a first sample containing EG, and Y is the score of a second sample having the same RebA concentration as that of the first sample and free of EG shown in Table 3. For example, in the case of a first sample with 100 ppm RebA and 50 ppm EG, the average score (X) of the bitter aftertaste intensity of the first sample is 2.00, and the average score (Y) of the bitter aftertaste intensity of a second sample (100 ppm RebA and 0 ppm EG) having the same RebA concentration as that of the first sample and free of EG is 3.00. Thus, the degree of reduction in bitterness (X-Y) is -1.00.

A sample was judged as having reduced bitter aftertaste when its average score was lower by 0.25 points or more than the average score of a sample with 0 ppm EG (an aqueous RebA solution without addition of EG) shown in Table 3 (i.e., when the degree of reduction in bitterness shown in Table 4 was -0.25 or less).

**[Table 1]**

| EG/RebA | | RebA (ppm) | | | | | | | | | |
|---|---|---|---|---|---|---|---|---|---|---|---|
| | | 0.5 | 10 | 25 | 50 | 100 | 250 | 500 | 1000 | 1500 | 2000 |
| EG (ppm) | 0 | 0 | 0 | 0 | 0 | 0 | 0 | 0 | 0 | 0 | 0 |
| | 5 | - | 0.5 | 0.2 | 0.1 | 0.05 | - | 0.01 | 0.005 | 0.0033 | 0.0025 |
| | 10 | - | 1 | 0.4 | 0.2 | 0.1 | - | 0.02 | 0.01 | 0.0067 | 0.005 |
| | 50 | 100 | 5 | 2 | 1 | 0.5 | 0.2 | 0.1 | 0.05 | 0.033 | 0.025 |
| | 100 | 200 | 10 | 4 | 2 | 1 | 0.4 | 0.2 | 0.1 | 0.067 | 0.05 |
| | 250 | 500 | 25 | 10 | 5 | 2.5 | 1 | 0.5 | 0.25 | 0.17 | 0.13 |
| | 500 | 1000 | 50 | 20 | 10 | 5 | 2 | 1 | 0.5 | 0.33 | 0.25 |
| | 1000 | 2000 | 100 | 40 | 20 | 10 | 4 | 2 | 1 | 0.67 | 0.5 |
| | 5000 | 10000 | 500 | 200 | 100 | 50 | 20 | 10 | 5 | 3.3 | 2.5 |

**[Table 2]**

| Panelist A | | RebA (ppm) | | | | | | | | | | |
|---|---|---|---|---|---|---|---|---|---|---|---|---|
| | | 0 | 0.5 | 10 | 25 | 50 | 100 | 250 | 500 | 1000 | 1500 | 2000 |
| EG (ppm) | 0 | 1 | 1 | 1.5 | 2 | 2.5 | 3 | 3.5 | 4 | 5 | 6 | 6 |
| | 5 | 1 | - | 1.5 | 2 | 2 | 2.5 | - | 3.5 | 4.5 | 5.5 | 5.5 |
| | 10 | 1 | - | 1.5 | 1.5 | 2 | 2.5 | - | 3.5 | 4 | 5 | 5.5 |
| | 50 | 1 | 1 | 1.5 | 1.5 | 2 | 2.5 | 3 | 3.5 | 4 | 4 | 5 |
| | 100 | 1 | 1 | 1 | 1.5 | 1.5 | 2 | 2.5 | 3 | 3 | 4 | 4 |
| | 250 | 1 | 1 | 1 | 1.5 | 1.5 | 1.5 | 2 | 2.5 | 2 | 3.5 | 4 |
| | 500 | 1 | 1 | 1 | 1.5 | 1 | 1 | 1.5 | 2 | 2 | 3 | 3.5 |
| | 1000 | 1 | 1 | 1 | 1 | 1 | 1.5 | 1.5 | 2 | 2 | 3 | 3 |
| | 5000 | 1.5 | 1.5 | 1 | 1 | 1 | 1 | 1.5 | 2 | 2 | 2 | 2 |

| Panelist B | | RebA (ppm) | | | | | | | | | | |
|---|---|---|---|---|---|---|---|---|---|---|---|---|
| | | 0 | 0.5 | 10 | 25 | 50 | 100 | 250 | 500 | 1000 | 1500 | 2000 |
| EG (ppm) | 0 | 1 | 1 | 1.5 | 2 | 2.5 | 3 | 3.5 | 4 | 5 | 6 | 6 |
| | 5 | 1 | - | 1.5 | 2 | 2 | 3 | - | 3.5 | 4.5 | 5 | 5 |
| | 10 | 1 | - | 1.5 | 2 | 2 | 2.5 | - | 3.5 | 4 | 4.5 | 4.5 |
| | 50 | 1 | 1 | 1 | 1.5 | 1.5 | 1.5 | 2.5 | 3.5 | 3.5 | 3.5 | 4 |
| | 100 | 1 | 1 | 1 | 1 | 1.5 | 1.5 | 2.5 | 3 | 3.5 | 3.5 | 4 |
| | 250 | 1 | 1 | 1 | 1 | 1.5 | 1.5 | 2 | 3 | 3.5 | 3.5 | 3.5 |
| | 500 | 1 | 1 | 1 | 1 | 1.5 | 1.5 | 2 | 3 | 2.5 | 2.5 | 3 |
| | 1000 | 1 | 1 | 1 | 1 | 1.5 | 1.5 | 1.5 | 3 | 2.5 | 2.5 | 3 |
| | 5000 | 1 | 1 | 1 | 1 | 1 | 1 | 1.5 | 2.5 | 2.5 | 2.5 | 3 |

**[Table 3]**

| | | RebA (ppm) | | | | | | | | | | |
|---|---|---|---|---|---|---|---|---|---|---|---|---|
| | | 0 | 0.5 | 10 | 25 | 50 | 100 | 250 | 500 | 1000 | 1500 | 2000 |
| EG (ppm) | 0 | 1.00 | 1.00 | 1.50 | 2.00 | 2.50 | 3.00 | 3.50 | 4.00 | 5.00 | 6.00 | 6.00 |
| | 5 | 1.00 | - | 1.50 | 2.00 | 2.00 | 2.75 | - | 3.50 | 4.50 | 5.25 | 5.25 |
| | 10 | 1.00 | - | 1.50 | 1.75 | 2.00 | 2.50 | - | 3.50 | 4.00 | 4.75 | 5.00 |
| | 50 | 1.00 | 1.00 | 1.25 | 1.50 | 1.75 | 2.00 | 2.75 | 3.50 | 3.75 | 3.75 | 4.50 |
| | 100 | 1.00 | 1.00 | 1.00 | 1.25 | 1.50 | 1.75 | 2.50 | 3.00 | 3.25 | 3.75 | 4.00 |
| | 250 | 1.00 | 1.00 | 1.00 | 1.25 | 1.50 | 1.50 | 2.00 | 2.75 | 2.75 | 3.50 | 3.75 |
| | 500 | 1.00 | 1.00 | 1.00 | 1.25 | 1.25 | 1.25 | 1.75 | 2.50 | 2.25 | 2.75 | 3.25 |
| | 1000 | 1.00 | 1.00 | 1.00 | 1.00 | 1.25 | 1.50 | 1.50 | 2.50 | 2.25 | 2.75 | 3.00 |
| | 5000 | 1.25 | 1.25 | 1.00 | 1.00 | 1.00 | 1.00 | 1.50 | 2.25 | 2.25 | 2.25 | 2.50 |

**[Table 4]**

| Degree of reduction | | RebA (ppm) | | | | | | | | | | |
|---|---|---|---|---|---|---|---|---|---|---|---|---|
| | | 0 | 0.5 | 10 | 25 | 50 | 100 | 250 | 500 | 1000 | 1500 | 2000 |
| EG (ppm) | 0 | - | - | - | - | - | - | - | - | - | - | - |
| | 5 | 0.00 | - | 0.00 | 0.00 | -0.50 | -0.25 | - | -0.50 | -0.50 | -0.75 | -0.75 |
| | 10 | 0.00 | - | 0.00 | -0.25 | -0.50 | -0.50 | - | -0.50 | -1.00 | -1.25 | -1.00 |
| | 50 | 0.00 | 0.00 | -0.25 | -0.50 | -0.75 | -1.00 | -0.75 | -0.50 | -1.25 | -2.25 | -1.50 |
| | 100 | 0.00 | 0.00 | -0.50 | -0.75 | -1.00 | -1.25 | -1.00 | -1.00 | -1.75 | -2.25 | -2.00 |
| | 250 | 0.00 | 0.00 | -0.50 | -0.75 | -1.00 | -1.50 | -1.50 | -1.25 | -2.25 | -2.50 | -2.25 |
| | 500 | 0.00 | 0.00 | -0.50 | -0.75 | -1.25 | -1.75 | -1.75 | -1.50 | -2.75 | -3.25 | -2.75 |
| | 1000 | 0.00 | 0.00 | -0.50 | -1.00 | -1.25 | -1.50 | -2.00 | -1.50 | -2.75 | -3.25 | -3.00 |
| | 5000 | 0.25 | 0.25 | -0.50 | -1.00 | -1.50 | -2.00 | -2.00 | -1.75 | -2.75 | -3.75 | -3.50 |

The above results show that the bitter aftertaste of RebA in a beverage containing RebA at a concentration of 50 to 2000 ppm can be reduced when the beverage contains an ethyl glycoside at a concentration of 5 ppm or more, for example.

The present invention can provide, for example, a rebaudioside A-containing beverage in which the bitterness of rebaudioside A is reduced.

## Claims

1. A rebaudioside A-containing beverage comprising:
rebaudioside A at a concentration of 30 to 2000 ppm; and
an ethyl glycoside at a concentration of 5 to 5000 ppm.

2. The beverage according to claim 1,
wherein the ethyl glycoside concentration is 100 to 5000 ppm.

3. The beverage according to claim 1 or 2,
wherein the ethyl glycoside is ethyl glucoside.

4. A method of producing a rebaudioside A-containing beverage containing rebaudioside A and an ethyl glycoside, the method comprising
adjusting a rebaudioside A concentration to 30 to 2000 ppm and an ethyl glycoside concentration to 5 to 5000 ppm in the beverage.

5. A method of reducing bitterness of rebaudioside A, the method comprising
adding an ethyl glycoside to rebaudioside A.

6. The method of reducing bitterness of rebaudioside A according to claim 5 for a rebaudioside A-containing beverage, the method comprising
adjusting a rebaudioside A concentration to 30 to 2000 ppm and an ethyl glycoside concentration to 5 to 5000 ppm in the beverage.

7. A rebaudioside A bitterness reducer comprising
an ethyl glycoside as an active ingredient.
